# EUROPÄISCHE PATENTSCHRIFT

(11) **EP 1 186 640 B1**
(45) Veröffentlichungstag und Bekanntmachung des Hinweises auf die Patenterteilung: **12.04.2006**
(21) Anmeldenummer: 01119527.8
(22) Anmeldetag: 14.08.2001
(51) Int. Cl.: C09D 183/04, C09D 183/08, C09D 183/14, C09D 183/10, C04B 41/49

(54) **Beschichtungsmaterial für multifunktionelle superphobe Schichten**
Coating composition for multifunctional superphobic coatings
Composition de revêtment pour des couches de revêtement multifonctionelles et superphobes

(30) Priorität: 07.09.2000 DE 10044216
(43) Veröffentlichungstag der Anmeldung: 13.03.2002
(73) Patentinhaber: Fraunhofer-Gesellschaft zur Förderung der angewandten Forschung e.V., 80686 München (DE)
(72) Erfinder: Rose, Klaus, Dr., 97318 Kitzingen (DE); Heinrich, Matthias, 97076 Würzburg (DE); Haas, Karl-Heinz, Dr., 97080 Würzburg (DE); Köhl, Michael, 79379 Britzingen (DE)
(74) Vertreter: Olgemöller, Luitgard Maria

(56) Entgegenhaltungen:
- DE-A- 19 726 862
- US-A- 4 311 623

## Beschreibung

Die vorliegende Erfindung ist auf Beschichtungsmaterialien gerichtet, mit denen sich Schichten erzeugen lassen, die sowohl extrem öl- und wasserabweisend als auch IR-reflektierend sind. Die Beschichtungsmaterialien sind insbesondere als Anstrichfarbe geeignet, z.B. als Innenanstriche oder Fassadenanstriche.

Reinigungsfreundliche, schmutzabweisende oder selbstreinigende Schichten sind in verschiedenen Varianten bekannt. So gibt es beispielsweise rein hydrophobe Beschichtungssysteme, die auf unpolaren Lacken basieren. Wenn sowohl eine öl-/fett- als auch eine wasserabweisende Ausrüstung erforderlich ist, werden zumeist Fluorkomponenten eingesetzt. So ist in der DE OS 41 18 184 berichtet worden, daß Fluor(silan)-haltige Schichten Antihafteffekte (hydrophob/oleophob) zeigen können. Auch das US-Patent 5 760 126 beschreibt fluorhaltige Beschichtungen, und zwar auf wäßriger Basis.

Als "Lotus-Effekt" ist ein Effekt zur Selbstreinigung von Oberflächen bekannt geworden. Er beruht auf dem Vorhandensein bestimmter, definierter Oberflächenstrukturen aus hydrophoben Materialien und ist der Natur nachempfunden, die das Abtropfen von Wasser von Pflanzenblättern auf ähnliche Weise bewerkstelligt (siehe EP 772 514 B1). Weiterhin ist berichtet worden, daß eine Kombination von oleophoben und hydrophoben Eigenschaften durch fraktale Strukturen erreicht werden kann, die in Form von Fluorsilan-behandelten Eloxalschichten auf Aluminium angeordnet sind.

Die Theorie der Benetzung sagt voraus, daß bei Kontaktwinkeln von Flüssigkeiten auf der Substratoberfläche von mehr als 90° eine Aufrauhung der Oberfläche zu einer verminderten Benetzung führt. Unterhalb von 90° findet eine erhöhte Benetzung statt. Für Anwendungen auf transparenten Substraten wie z.B. Glas sind Rauhigkeiten im nm-Bereich notwendig. So wurde beispielsweise von B.S. Hong et al. in Proc. 2^{nd} Int. Conf. on Coatings on Glass (ICCG) Saarbrücken, 1998, Seiten 388 bis 392 eine gezielte Entmischung von Sol-Gel-Systemen zur Erzeugung von Nanorauhigkeiten untersucht und ihr Einfluß auf Benetzungseigenschaften genutzt. S. Sepeur et al. haben in der Werkstoffwoche 99 - Euromat - Session - "Properties and Technological Applications of Nanostructured Materials" über den Einfluß der Oberflächenrauhigkeit von perfluorierten Nanocomposite-Materialien mit hoher Kratzfestigkeit berichtet. Das Einarbeiten von Siliciumdioxid-Partikeln mit einem Durchmesser von 230nm steigerte die hydrophoben und oleophoben Eigenschaften der Oberfläche deutlich. Anstelle der Erzeugung von Oberflächenrauhigkeiten durch Beeinflussung der Materialeigenschaften können Oberflächen auch durch Verfahren wie Prägen oder dergleichen strukturiert werden. So haben D. Sporn et al. im Spektrum der Wissenschaft, Seite 20-22, 1997, über ultrafeine Strukturen für die Entspiegelung berichtet, die "vom Mottenauge abgeschaut" sind.

Anstrichstoffe mit niedrigem Emissionsvermögen im Bereich der Wärmestrahlung wurden von G. Hugo in der DE 44 18 214 C2 offenbart. Dabei wird in ein Bindemittel mit hoher Transparenz im Bereich von 3 bis 50µm ein Pigment eingearbeitet, das ebenfalls in diesem Bereich eine hohe Transparenz aufweist, wobei jedoch der Brechungsindex des Bindemittels von demjenigen der Teilchen im angegebenen Bereich der Wärmestrahlung verschieden ist. Als Pigmente werden insbesondere Metallsulfide, -selenide, -chloride und -fluoride vorgeschlagen. Die Einstellung des Maximums der IR-Reflexion kann über die Partikelgröße sowie die Kombination von Pigmenten erreicht werden (DE 195 01 114 Al und 196 50 300 Al). Auch Pigment aus braunem Rutil ist als hochgradig infrarot-reflektierend beschrieben worden. Die DE 198 56 171 offenbart die Verwendung von funktionellen Perlglanzpigmenten in transparenten Medien, die sich als Anstrich für Gebäudefassaden eignen und winkelselektive Transmissions- bzw. Reflexionseigenschaften im sichtbaren Bereich haben. Der Einfluß IR-reflektierender Pigmente auf den Wärmehaushalt von Gebäuden und bei militärischen Anwendungen wurde von L.V. Wake in J. Oil Colour Chem. Assoc., Seiten 78 bis 81 (1990) beschrieben. Wärmereflexion kann auch erreicht werden durch die Verwendung von keramischen Hohlkugeln in einer Polymermatrix. Produkte mit solchen Bestandteilen werden bereits für Anstriche im Innenbereich vertrieben; sie sollen bis zu 10% der Heizkosten sparen.

Die DE 196 39 783 Al der Firma Merck, Hüls AG, beschreibt metalloxidbeschichtete Pigmente speziell für wasserbasierende Lacksysteme. Die Pigmente haben die Struktur von Plättchen mit einer auf der obersten Metalloxidschicht befindlichen Deckschicht aus bestimmten Oxiden und/oder Mischoxiden. Als Wasserlacksystem werden oligomere Silansysteme beschrieben. Diese bilden siliciumfunktionelle Hydroxylgruppen aus, die chemische Bindungen zu den Hydroxylgruppen der Pigmentoberflächen ausbilden. Die Pigmente haben keine Reflexionseigenschaften im Infrarotbereich.

In der US-Patentschrift 4 311 623 wird der Einbau von Zinksulfid und anderen Pigmenten in Silicon-Alkydharze vorgeschlagen.

Die DE 197 26 862 A1 beschreibt ein Verfahren zur Herstellung einer transparenten Schutzschicht mit reflektierenden Eigenschaften im Infrarotbereich, die zur Beschichtung von in Kühl- oder Gefriervorrichtungen eingesetzten Glasscheiben oder transparenten Polymerscheiben eingesetzt werden kann. Die Schutzschicht ist vorzugsweise zweiteilig ausgebildet, wobei eine dünne Metallsulfidschicht auf dem Polymer oder Glas aufgebracht und mit einem sog. ORMOCER überschichtet wird. Alternativ wird vorgeschlagen, daß ein Zusatzstoff mit reflektierenden Eigenschaften in ein solches ORMOCER direkt eingearbeitet wird.

Aufgabe der vorliegenden Erfindung ist es, Beschichtungsmaterialien bereitzustellen, aus denen sich Beschichtungen mit ausgezeichneter Oleophobie/Hydrophobie und gleichzeitig wärmereflektierenden Eigenschaften herstellen lassen. Die Materialien sollten über Naßlacktechniken verarbeitbar und vorzugsweise selbsthärtend sein, damit sie als Anstrichfarben (z.B. Fassaden- oder Innenanstriche) eingesetzt werden können. Wünschenswerterweise sind sie ferner lösemittelfrei oder enthalten einen nur geringen Anteil an Lösemitteln. Falls Lösemittel benötigt werden, sollten diese möglichst nichttoxisch und umweltverträglich/gut biologisch abbaubar sein.

Überraschend konnte gefunden werden, daß diese Aufgabe durch die Bereitstellung von Beschichtungsmaterialien gelöst werden kann, die IR-reflektierende Pigmente mit Abmessungen im Bereich von etwa 1 bis 50 µm oder Hohlkugeln mit denselben Abmessungen aufweisen.

Die Beschichtungsmaterialien sollten vor dem Auftrag auf den vorgesehenen Untergrund eine Viskosität aufweisen, bei der sie mit üblichen Mitteln wie Rollen oder Pinseln aufgestrichen, aufgesprüht oder anderweitig aufgetragen werden können. Sie dürfen oder sollten dabei relativ dünnflüssig sein, derart, daß die Pigmentteilchen nach dem Auftrag in den oberflächennahen Schichten mit einer möglichst dünnen, eine stochastische Oberflächenstruktur ausbildenden, andererseits jedoch für den Erhalt der Witterungsbeständigkeit ausreichend dicken Schicht an Bindemittel bedeckt sind. Viskositäten, wie sie beispielsweise kühl gelagerter Honig besitzt (d.h. "zäh wie Honig" sind), sollten dagegen vermieden werden. Das Beschichtungsmaterial kann gegebenenfalls durch Abtrennen oder Zusatz von Lösungs- bzw. Dispersionsmittel (vorzugsweise Wasser) auf eine adäquate Viskosität eingestellt werden. Auf diese Weise kann auf zusätzliche Strukturierungen der Oberfläche wie Prägen oder dgl. verzichtet werden.

Die schmutzabweisenden Eigenschaften (Oleophobie und Hydrophobie) der aus dem Beschichtungsmaterial gebildeten Schichten werden noch dadurch verbessert, daß das Bindemittel der Beschichtungsmaterialien bzw. der Beschichtungen mindestens ein gegebenenfalls organisch polymerisierbares/polymerisiertes Silan der Formel (I)

XₐR_{b}SiR¹ _{4-a-b} (I)

worin
X eine hydrolysierbare Gruppe ist,
R ggf. substituiertes Alkyl, Alkenyl, Aryl, Alkylaryl oder Arylalkyl ist,
R¹ ein organischer Rest ist, der über Kohlenstoff an das Silicium gebunden ist und eine reaktive Gruppe trägt, vor allem eine solche, die organische Reaktionen eingehen kann,
a eine ganze Zahl von 1 bis 3 ist und
b eine ganze Zahl von 0 bis 2 ist,
oder ein (Teil-)Kondensat dieses Silans enthält. Solche (teil-)kondensierte, ggf. organisch modifizierbare/modifizierte Silane sind in großer Zahl beschrieben worden; die Kondensate, allein oder in Mischung mit weiteren (teil-)hydrolysierten Metallverbindungen und/oder organischen Komponenten, werden häufig unter der Bezeichnung ORMOCERE® zusammengefaßt.
Insbesondere sind solche Beschichtungsmaterialien bevorzugt, die selbsttrocknend sind. Als selbsttrocknende Materialien sind z.B. solche geeignet, die aus Sol-Gel-Systemen gebildet werden. Die Silane werden dabei durch Zugabe einer geeigneten Menge Wasser hydrolysiert und teilweise oder vollständig kondensiert. Nach dem Auftragen des Materials auf einen zu beschichtenden Untergrund verdampft oder verdunstet das vorhandene Lösungsmittel. Dabei kann ggf. außerdem durch weitere Kondensation eine Endvernetzung und Aushärtung bewirkt werden.
In manchen Ausgestaltungen der Erfindung sind bzw. werden die Silane außerdem über organische Gruppen untereinander und/oder mit rein organischen Komponenten des Beschichtungsmaterials vernetzt, und zwar durch Polyadditionen oder Polymerisationsreaktionen. Um zu vermeiden, daß für die Aushärtung solcher Systeme Wärme oder UV-Strahlung angewendet werden muß, ist es in solchen Fällen bevorzugt, die organische Vernetzung bereits vor dem Auftragen des Beschichtungsmaterials auf den Untergrund zu bewirken. In diesen bevorzugten Fällen ist natürlich darauf zu achten, daß die Viskosität des Materials nicht zu stark ansteigt bzw. eine geeignete Menge an Verdünnungs- oder Dispergiermittel zugesetzt wird.

Gut geeignet für die Zwecke der vorliegenden Erfindung sind ggf. teilkondensierte Silane der Formel (I) mit folgenden Indices: X ist Wasserstoff, Halogen, Hydroxy, eine ggf. substituierte Alkoxy-, Acyloxy-, Alkylcarbonyl- oder Alkoxycarbonylgruppe mit vorzugsweise 1-8, stärker bevorzugt 1-4 Kohlenstoffatomen in der Alkyl- oder Acylgruppe, NR³ mit R³ gleich Wasserstoff, ggf. substituiertes Alkyl mit vorzugsweise 1-8 und stärker bevorzugt 1-4 Kohlenstoffatomen oder ggf. substituiertes Aryl; und R ist eine ggf. substituierte Alkyl-, Alkenyl-, Aryl-, Alkylaryl- oder Arylalkylgruppe mit 1-10, häufig mit 1-4 Alkylkohlenstoffatomen. In einer besonders bevorzugten Ausgestaltung ist der Rest R teilweise mit Fluor substituiert, beispielsweise in einer der vorgenannten Gruppen mit 6 bis 10 Kohlenstoffatomen und 4-8 Fluoratomen. Sofern eine Gruppe R¹ im Molekül vorhanden ist, trägt R¹ vorzugsweise mindestens eine Amino-, Epoxid-, Vinyl- oder (Meth-)Acrylatgruppe. Das Vorhandensein solcher Gruppen hat häufig den Vorteil, daß die Pigmente in der Beschichtungsmatrix besser eingebunden werden. So haben beispielsweise Diole, die durch Hydrolyse aus Epoxygruppen entstehen können, oder Amine eine hohe Affinität zu den einsetzbaren Pigmenten.

Besonders gut geeignet für die Zwecke der vorliegenden Erfindung sind Beschichtungsmaterialien mit mindestens zwei verschiedenen, ggf. teilkondensierten Silanen, wobei mindestens ein Silan der Formel (III)

XₐR_{b}SiR¹ _{4-a-b} (III)

eingesetzt wird, in welchem X dieselbe Bedeutung hat wie in Formel (I), R¹ dieselbe Bedeutung wie für Formel (I) angegeben besitzt und vorzugsweise ein C₁-C₆-Alkylenamin ist, und a+b 3 bedeutet, und als Vernetzungsmittel mindestens ein Silan der Formel (IV)

XₐSiR_{b} (IV),

vorhanden ist, in welchem a eine ganze Zahl von 1 bis 4 ist, a+b 4 bedeutet, X vorzugsweise ein C₁-C₄-Alkoxy ist und R vorzugsweise ein C₁-C₄-Alkyl ist, oder ein oligomeres Kondensat dieser Silane, das durch getrennte oder gemeinsame Hydrolyse der Silane entstanden sein kann. Ein Beispiel für Silane der Formel (III) sind omega-Aminoalkyl-alkyl-dialkoxysilane mit C₁-C₃₋Alkylgruppen; als konkrete Vertreter dieser Silane seien 3-Aminopropyl-methyl-diethoxysilan oder 3-Aminopropyl-triethoxysilan genannt. Beispiele für Silane der Formel (IV) sind Di-, Tri- oder Tetraalkoxysilane mit C₁-C₃-Alkoxygruppen; als konkrete Vertreter seien Tetraethoxysilan und Dimethyldimethoxysilan genannt. Beispiele für oligomere Kondensate sind Siloxane der Formel R-[OSi(OR)₂]ₙ-OR mit R gleich Methyl, Ethyl und n gleich 2 oder 3, z.B. Dynasil 40 oder Dynasil 50 der Firma Hüls.

Das oder die Silan(e) der Formel (I) bzw. (III) oder dessen/deren (Teil-)Kondensate können in geeigneter Weise in einer Menge von etwa 5-95 Mol-%, bezogen auf alle Bestandteile des Bindemittels (d.h. alle Bestandteile des Beschichtungsmaterials mit Ausnahme von Wasser, ggf. weiterem Lösemittel und Pigment), vorhanden sein. Bevorzugt sind es etwa 10-50 Mol-%. Silan der Formel (IV) kann, sofern vorhanden, in einer Menge von vorzugsweise bis zu 50 Mol-%, rechnerisch bezogen auf die Gesamt-Molmengen an monomerem Silan, vorliegen. Bevorzugt sind es etwa 10-50 Mol-%, stärker bevorzugt etwa 25-45 Mol-%.

Besonders gut geeignet für die Zwecke der vorliegenden Erfindung sind auch Beschichtungsmaterialien mit einem oder mehreren Silanen der voranstehend angegebenen Formel (IV), jedoch ohne Zusatz von Silanen der Formel (III), wobei in diesem Fall diese Silane das "Gerüst" des kondensierten Beschichtungsmaterials bilden. Konkrete Beispiele für solche Silane sind Dialkyldialkoxysilane, z.B. Dimethyldimethoxysilan oder Diethyldiethoxysilan, oder Alkyltrialkoxysilan, z.B. Methyltrimethoxysilan oder Ethyltriethoxysilan, die allein oder in Mischung eingesetzt werden können.

In einer Ausgestaltung der Erfindung enthält das Beschichtungsmaterial neben einem oder mehreren ggf. teilkondensierten Silanen der Formel (I) (bzw. (III) und/oder (IV) wie voranstehend erläutert) mindestens eine Metallverbindung der Formel (II)

M(OR²)ₙ (II)

Das Metall M dieser Verbindung sollte unter solchen Elementen der Haupt- und Nebengruppen des Periodensystems ausgewählt werden, die formal in der Oxidationsstufe 3 oder 4 existieren können. Bevorzugt bedeutet es Ge, Sn, Pb, Ti, B oder Al. Je nach Wertigkeit bedeutet M 3 oder 4. R² hat in dieser Formel vorzugsweise die gleiche Bedeutung wie R in der Formel (I). Da viele Metallverbindungen mit der formalen Oxidationsstufe 3 oder 4 auch als Komplexe mit einer Vielzahl von Liganden vorliegen können, kann das Beschichtungsmaterial statt dessen oder zusätzlich jedoch auch Verbindungen aufweisen, in denen ein Teil oder alle Gruppen OR² der Formel (II) ersetzt sind durch einen oder mehrere Liganden L, der/die stärker an das Metall M gebunden werden als die Gruppe (OR²). Diese besitzen die Formel (V)

(R²O)ₘMLₙ, (V)

worin
M ganz besonders bevorzugt Ti, Zr und Al ist, und/oder
R² ganz besonders bevorzugt C₁-C₆-Alkyl ist, und/oder
L ganz besonders bevorzugt ausgewählt ist unter 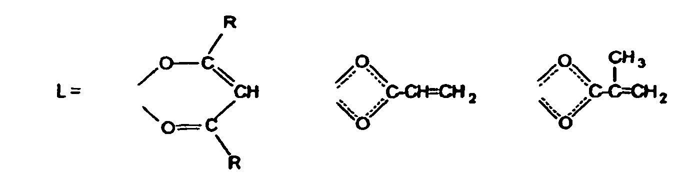 wobei m eine ganze Zahl von 1 bis 3 ist und
n eine ganze Zahl von 1 bis 3 ist.

Vorzugsweise liegen Verbindungen der Formel (II) bzw. (V) in einer Menge von bis zu 50 Mol-%, rechnerisch bezogen auf die Gesamt-Molmengen an monomerem Silan, vor, bevorzugt von 5-20 Mol-%.

In einer weiteren Ausgestaltung der Erfindung, bei der die obigen Metallverbindungen der Formeln (II) und/oder (V) vorhanden sein können oder nicht, und worin das oder die Silane eine beliebige der vorgenannten Bedeutungen haben können, vorzugsweise aber in den als besonders gut geeignet beschriebenen Ausführungsformen vorliegen, enthält das Beschichtungsmaterial weiterhin mindestens einen polymeren, als Verdickungsmittel oder Dispergierhilfsmittel dienenden Zusatzstoff. Beispiele hierfür sind Polyvinylalkohol, Polyvinylacetat, Polyvinylbutyral Copolymere dieser Substanzen in beliebiger Kombination, Poly(meth)acrylsäureester und Copolymere davon, (Meth-)Acryl/Styrol-Copolymere, Polyacrylsäure, Acrylsäure-Maleinsäure-Copolymere, Styrol/Allylalkohol-Copolymere, Poylvinylpyrrolidon und Vinylpyrrolidon/Acrylsäure-Copolymere. Diese Stoffe liegen vorzugsweise als Niederpolymere vor.

Die genannten Polymere können als reiner Zusatzstoff enthalten sein oder nach Modifizierung bzw. Copolymerisation mit monomeren Alkoxysilanen infolge Hydrolyse und Kondensation mit der Silankondensat-Matrix verbunden sein. Sie werden in vorteilhafter Weise in einer Menge von bis zu 80 Gew.-% zugesetzt, bezogen auf die Gesamtmenge der Bestandteile des Beschichtungsmaterials mit Ausnahme von Wasser und ggf. Lösemittel. Bevorzugt ist eine Menge von 10-60 Gew.-%.

Weiterhin ist es möglich, daß organische Monomere wie (Meth-)Acrylsäureester mit Silanen der Formel (I) copolymerisiert werden, in denen a+b nicht mehr als 3 ist und die Gruppe R¹ einen organisch polymerisierbaren Rest, z.B. eine Vinyl- oder Methacryloxyalkylgruppe, trägt. Solche Silane können z.B. Vinyldi- oder -trialkoxysilan oder Methacryloxypropyltrimethoxysilan sein. Ihre Menge kann im Bereich dessen liegen, was voranstehende für die organischen Polymere genannt wurde.

Statt dessen oder zusätzlich können organische Polymere wie die vorgenannten mit geeigneten Silanen nachträglich modifiziert werden. Ein Beispiel hierfür ist die Modifizierung von Polyvinylalkohol mit 3-Triethoxysilylpropylbernsteinsäureanhydrid oder mit Isocyanatopropyltriethoxysilan:

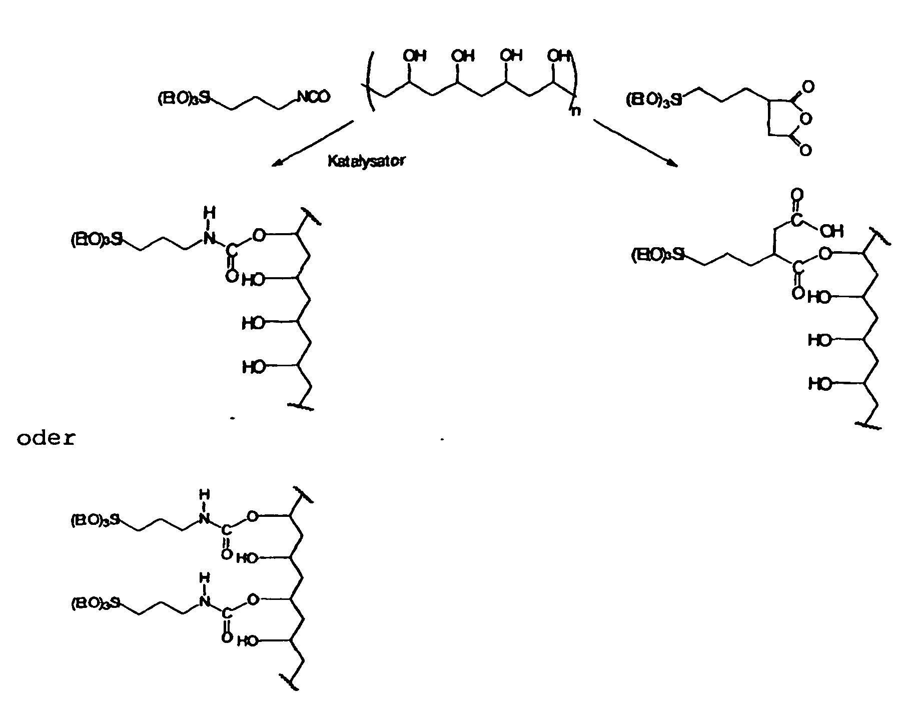

Dieses Beispiel läßt sich auf andere der genannten Stoffe übertragen, z.B. auf Polyvinylbutyral.

Eine weitere Möglichkeit der Polymermodifizierung ist die Umsetzung von Säuregruppen enthaltenden Polymeren wie Polyacrylsäure mit Aminosilanen, z.B. H₂N-(CH₂)ₓ-Si(OR)₃ mit x vorzugsweise gleich 1-4 und R vorzugsweise gleich Methyl oder Ethyl, zum Säureamid mit hydrolysierbaren Gruppen.

Eine weitere Verbesserung der schmutzabweisenden Wirkung wird durch den Einbau von fluorierten Alkylketten erzielt, die wie oben erwähnt an die Silane der Formel (I) gebunden sein können, aber auch durch den Zusatz fluorierter organischer Verbindungen in das Beschichtungsmaterial eingearbeitet werden können. Denn es ist unwesentlich, ob die fluorierten Gruppen an das Silicium-Netzwerk und/oder das - ggf. mit diesem verknüpfte - organische Polymernetzwerk gebunden sind. Bevorzugt ist es, wenn sich die Fluorgruppen zur Oberfläche der aus dem Beschichtungsmaterial erzeugten Beschichtung hin ausrichten. In einer bevorzugten Ausgestaltung enthält das Beschichtungsmaterial ggf. teilweise oder vollständig hydrolysierte/kondensierte Silane der Formel (IV) wie voranstehend beschrieben, zusammen mit Silanen der Formel (I), worin R ein teilweise fluorierter Alkylrest, bevorzugt ein C₆-C₁₀-Alkylrest mit etwa 4-16 Fluoratomen ist, vorzugsweise mit 4-8 CF₂-Gruppen und ggf. weiterhin eine oder mehrere Metallverbindungen der Formeln (II) und/oder (V).

Einen besonders guten Abperleffekt erzielt man durch die Einarbeitung von Melamin/Formaldehyd- oder Harnstoff/Formaldehyd-Mikrohohlkugeln mit Durchmessern von z.B. 1-30µm in das erfindungsgemäße Beschichtungsmaterial. Mit Beschichtungsmaterialien, die solche Hohlkugeln enthalten, lassen sich Benetzungs-Randwinkel von bis zu 145° messen.

Die IR-reflektierenden Pigmente, die in der vorliegenden Erfindung eingesetzt werden können, sind nicht beschränkt, sofern sie im wesentlichen oder zu großen Teilen (vorzugsweise zu mehr als 50%, günstiger zu mehr als 75%) in den oben genannten Größen vorliegen. Gut geeignet für die Erfindung sind elektrisch leitende Metallflitter, die zur Farbgebung und/oder zum Korrosionsschutz beschichtet sein können, oder Dielektrika mit hinreichend großer Brechzahldifferenz (vorzugsweise mindestens 0,1, stärker bevorzugt etwa 0,2 bis 0,3) zum Bindemittel. Es ist auch möglich, offene oder geschlossene, dielektrische Hohlkugeln zu verwenden, deren Brechzahl dann nahe bei 1 liegt und die als Streuzentren ihre maximale Wirkung in Bindern mit relativ hoher Brechzahl entfalten. Besonders bevorzugt ist es, Pigmente mit hoher Reflexionskraft im Wellenlängenbereich zwischen 8 und 14 µm zu verwenden. Werden nämlich Beschichtungsmaterialien mit diesen Eigenschaften als Fassadenfarbe eingesetzt, verringern sich insbesondere die Strahlungsverluste, wodurch die Oberflächentemperatur steigt und die Wärmeverluste z.B. des angestrichenen Hauses sinken. Außerdem verringert sich die Häufigkeit von Taupunktunterschreitungen. Auch dies ist vorteilhaft, da Betauung zu Wasseraufnahme und Verschmutzung führt.

Als Beispiele für geeignete Infrarot-reflektierende Pigmente seien Metalle und Metall-Legierungen genannt, insbesondere Aluminium, Chrom, Eisen, Kupfer, Nickel, Silber, Gold, Eisen, Zinn, Zink, Bronze, Messing, Eisenlegierungen und Nickellegierungen. Auch Metallsulfide können verwendet werden, insbesondere Kupfer-, Blei- und Zinksulfid, des weiteren Metallfluoride, insbesondere Calciumfluorid, Bariumfluorid und Natriumfluorid, und Metalloxide, insbesondere Zinkoxid, Titandioxid, Magnesiumdioxid oder Antimondioxid. Dielektrische Pigmente sind z.B. keramische oder glasartige Pigmente.

Die Menge an Pigment im Beschichtungsmaterial liegt günstigerweise bei mindestens 5 Gew.-%, bezogen auf alle Bestandteile des Beschichtungsmaterials mit Ausnahme von Wasser und ggf. weiterem Lösemittel; vorteilhaft werden bis zu 60 Gew.-% gewählt, und ganz besonders bevorzugt 15-50 Gew.-%.

Die Pigmente selbst können wie bereits erwähnt in geeigneter Weise beschichtet oder an der Oberfläche derivatisiert sein. Wenn die Oberfläche Hydroxigruppen aufweist, können die Pigmente beispielsweise in das Netzwerk eingebunden werden, wodurch vermieden wird, daß sie sich ggf. bei längerem Stehen absetzen könnten. Sie können weiterhin mit einer farbigen Schicht versehen sein, wenn sie nicht selbst eine geeignete Farbe aufweisen. Dadurch lassen sich beliebige farbliche Effekte z.B. für Fassadenfarben erzeugen. Natürlich kann eine Fassadenfarbe auch weiß sein, z.B. durch den Zusatz von Gips, Talkum, Kreide oder Titandioxid.

Infrarotselektive Fassadenfarben beeinflussen die Strahlungsbilanz von Gebäudehüllen und haben daher Auswirkungen auf die Oberflächentemperatur der Fassade. Hierdurch lassen sich für die Nutzung des Gebäudes wesentliche Effekte erzielen, die teilweise bereits voranstehend erläutert wurden. Überraschenderweise hat sich bei der Verwendung der erfindungsgemäßen Beschichtungsmaterialien aber vor allem ein synergistischer Effekt eingestellt. Durch die schmutzabweisende Oberfläche der aus bzw. mit den erfindungsgemäßen Beschichtungsmaterialien hergestellten Innen- und Außenanstrichen bleibt der Effekt der Infrarotreflexion nämlich länger erhalten, da Verschmutzungen in der Regel einen höheren thermischen Emissionsgrad aufweisen und damit die Wärmeabstrahlung erhöhen. Durch die Kombination von IR-Strahlung und fett-/öl- sowie wasserabweisenden Eigenschaften werden die Zeiten der Betauung reduziert und die Benetzung bzw. Durchfeuchtung der Gebäudeaußenhaut deutlich verringert. Umgekehrt wird auch durch die Pigmente die schmutzabweisende Wirkung der Fassadenfarbe synergistisch verbessert, da Pigmente mit einer hydrophoben/oleophoben Matrix einen sehr guten Abperleffekt gegenüber Wassertropfen aufweisen (man kann auf Beschichtungen auch ohne organische Mikrohohlkugeln Randwinkel im Bereich von ca. 130° messen).

Der Einsatz von organisch modifizierten Silanen als Ausgangsverbindungen in den Beschichtungsmaterialien erlaubt es außerdem in vielen Fällen, in ausschließlich oder im wesentlichen wäßrigen Systemen zu arbeiten, was die Materialien der Erfindung umweltverträglich macht. Die erhaltenen Beschichtungen weisen eine hohe Bewitterungsstabilität auf.

Zur Herstellung der erfindungsgemäßen Beschichtungsmaterialien können die gewählten Silane in monomerer Form oder bereits teilkondensiert oder organisch vorpolymerisiert in einem Lösungsmittel vorgelegt werden, bei dem es sich vorzugsweise um Wasser handelt. Gegebenenfalls muß dem Lösungsmittel Wasser zugesetzt werden. Nach Hydrolyse und Kondensation können ggf. organische Monomere oder Polymere zugesetzt werden. Sofern diese mit organisch polymerisierbaren Gruppen an dem/den Silan(en) polymerisiert werden sollen, wird die entsprechende Reaktion ermöglicht, z.B. durch Zusatz von Initiatoren und Einwirkung von Wärme oder UV-Strahlung. Sollen Metallalkoxide der Formeln (II) oder (V), ggf. in komplexierter Form, zugesetzt werden, ist es vorteilhaft, dies als nächsten Schritt zu bewirken, z.B. durch Zusatz eines entsprechenden Alkoxids in einem ggf. komplexierenden Lösungsmittel wie Aceton oder Acetylacetonat.

Umgekehrt ist es natürlich auch möglich, das oder die Silane in monomerer oder vorkondensierter Form zu einer Mischung aus ggf. komplexiertem Metallalkoxid der Formel (II) bzw. (V) und ggf. organischen Mono- oder Polymeren in einem geeigneten Solvens oder Komplexierungsmittel zu geben und die für die Hydrolyse erforderliche Wassermenge anschließend zuzusetzen. Schließlich wird die vorgesehene Menge an Pigment zugesetzt. Sofern nötig, wird die Viskosität des erhaltenen Gemischs durch Zugabe oder Entfernen von Wasser oder anderem Lösemittel erhöht oder erniedrigt. Außerdem kann vorgesehen sein, ggf. vorhandenes Wasser gegen ein anderes, vorzugsweise niedrig siedendes Lösungsmittel auszutauschen, um den Trockungsprozeß der aufgetragenen Beschichtung zu beschleunigen oder zu erleichtern.

Man erhält mit diesem Sol-Gel-Herstellungsverfahren ein Beschichtungsmaterial, das beispielsweise als Innenanstrich- oder Fassadenfarbe eingesetzt oder herkömmlichen solchen Farben zugemischt werden kann. Nach Auftragen auf eine Unterlage, z.B. durch Aufrollen, Aufpinseln oder Aufrakeln, läßt man das Material trocknen und ggf. aushärten, bis es nicht mehr klebt.

Nachstehend wird die Erfindung anhand von **Beispielen** näher erläutert.

### Beispiel 1

| | AMDEOS | TEOS | Polyacrylsäure | Ti (OEt)₄ | EAA |
|---|---|---|---|---|---|
| | **1** | **2** | **3** | **4** | **5** |
| MG | 191,36 | 208 | *) | | |
| mmol | 10 | 1 | 6,84 | 1 | 4 |
| g | 1,91 | 0,208 | 0,5 | 0,22 | 0,52 |

| | | | | | |
|---|---|---|---|---|---|
| AMDEOS 3-Aminopropyl-methyldiethoxysilan | | | | | |
| TEOS = Tetraethoxysilan | | | | | |
| EAA = Ethylacetoacetat | | | | | |
| *) = (500.000 bis 1.000.000) Monomereinheit:73,04 | | | | | |

**1** und **2** werden gemischt und in 10g Wasser gelöst. Das Sol wird 20 min. vorhydrolysiert, anschließend wird **3** hinzugegeben. Es resultiert eine zähe hochviskose Flüssigkeit, zu der der frisch hergestellte Komplex aus **4** und **5** hinzugegeben wird.

In der Lösung werden 0.93g Pigment Paliochrom R2/237 (BASF) eindispergiert. Die resultierende Suspension wird mit einer Schichtdicke von 80µm auf ein Substrat aufgerakelt. Die Schicht trocknet innerhalb von 1 h zur Klebfreiheit. Randwinkel gegen Wasser: 82°.

### Beispiel 2

| | PVA 22.000 | Ti (OPr)₄ | AMEO | Me₂Si (OMe)₂ |
|---|---|---|---|---|
| | **1** | **2** | **3** | **4** |
| MG | 44 | 284.37 | 179 | 120.22 |
| mmol | 100 | 10 | 10.2 | 22.79 |
| g | 4.4 | 2.84 | 1.84 | 2.74 |

| | | | | |
|---|---|---|---|---|
| PVA = Polyvinylalkohol | | | | |
| AMEO = Aminopropyl-triethoxysilan | | | | |

### Variante a)

**1** wird in 10g Aceton suspendiert und anschließend **2** hinzugegeben. Die resultierende Suspension wird gerührt, und 20g Wasser werden zugegeben. Nacheinander werden **3** und **4** hinzugegeben, und das Gemisch wird über Nacht gerührt. Nach Abziehen von 10g Lösungsmittel erhält man eine weiße, viskose Suspension (31,8g mit Feststoffgehalt von 24,3%). Es werden 3,19g (entspricht 10% bzgl. der Gesamtmenge bzw. 43% bzgl. der ORMOCER-Komponenten) Paliochrom R2/237 (BASF) suspendiert. Das Gemisch wird mit einer Naßfilmdicke von 120µm auf ein Substrat aufgerakelt. Die Schicht trocknet innerhalb von 1 h zur Klebfreiheit.

### Variante b)

Zur Suspension von Variante a) werden 0.36g Polyacrylsäure (MG 2000) 65% in Wasser hinzugegeben, und das Gemisch wird mit einer Naßfilmdicke von 120µm aufgerakelt. Nach einer Stunde bei Raumtemperatur ist ebenfalls Klebfreiheit der Schicht erreicht.

### Beispiel 3

20 mmol (4.96) Methacryloxypropyltrimethoxysilan und 5 mmol (1.04g) Tetraethoxysilan werden zu einer Dispersion von 3.26g Dodecylbenzolsulfonsäure-Natriumsalz und 1g Paliochrom R2/237 (BASF) in 20ml EtOH gegeben und während des Dispergierprozesses mit 0.72g 0.1N wässriger NH₄F-Lösung (entspricht 40 mmol Wasser) hydrolysiert. Die Suspension wird über Nacht gerührt. Nach Zugabe von TRIGONOX 21 Akzo-Nobel (3% bzgl. der eingewogenen Silanmenge) wird eine Schicht mit 120µm Naßfilmdicke auf Glas aufgerakelt und bei 130° gehärtet (1 Stunde).

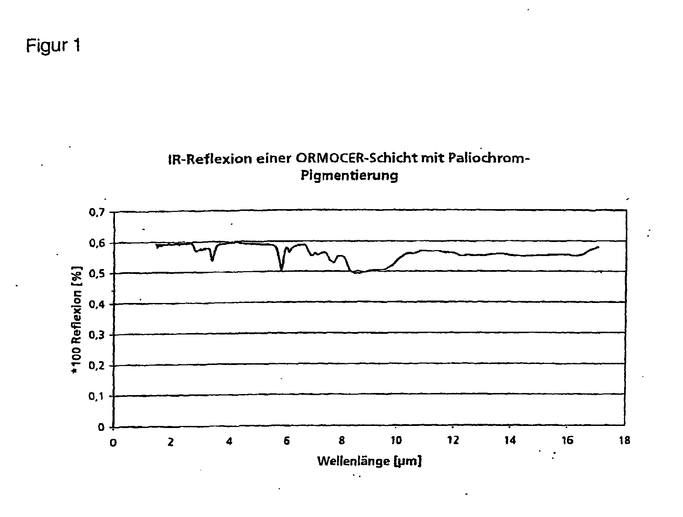

Die IR-Reflexion dieser Schicht ist in **Figur 1** gezeigt. Die IR-Reflexion des reinen Pigments beträgt integral 70%.

### Beispiel 4

Silanisierung von Polyvinylalkohol:
a) 35,2 g (0,8 mol, bzgl. einer Monomereinheit) Polyvinylalkohol mit einem mittleren Molgewicht von 22000 und 49,4 g (0,2 mol) 3-Isocyanatopropyltriethoxysilan wurden gemischt und anschließend mit 2,4 g (0,004 mol) Dibutylzinndilaurat versetzt. Nach 4 h Rühren unter Erwärmung (50-60°C) hatte das Isocyanatosilan abreagiert, und das Gemisch konnte eingesetzt werden.
b) 13,2 g (0,3 mol, bzgl. einer Monomereinheit) des gleichen Polyvinylalkohols, der für Beispiel 4(a) eingesetzt wurde, und 30,4 g (0,1 mol) 3-Bernsteinsäureanhydridpropyltriethoxysilan wurden gemischt und für 2 h unter Erwärmung (60°C) und anschließend 16 h bei 20°C gerührt, bis das

Bernsteinsäureanhydridsilan abreagiert hatte. Das Gemisch wurde anschließend unverändert weiterverarbeitet.

### Beispiel 5

Silanisierung von Styrol/Allylalkohol-Copolymeren: 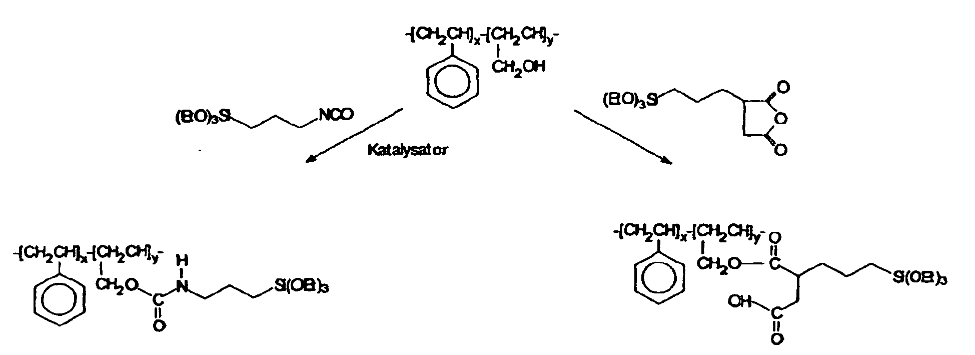
a) 85,6 g (0,4 mol bezogen auf eine theoretische Monomereinheit) eines Styrol/Allylalkohol-Copolymeren wie im obigen Formelbild als Ausgangsmaterial gezeigt, mit einem mittleren Molgewicht von 1200 und einem Verhältnis von x:y von 60:40 (theoretische Monomereinheit aus 1,5 x und 1 y: Molgewicht 214) wurden in 40 g Aceton gelöst. Anschließend wurden 24,7, g (0,1 mol) Isocyanatopropyltriethoxysilan zugegeben. Dann wurden langsam 1,26 (0,002 mol) Dibutylzinndilaurat zu dem Gemisch hinzugetropft, das sich dabei leicht erwärmte. Dieses wurde dann weitere 16 h lang bei 20°C gerührt.
b) 85,6 g (0,4 mol, bezogen auf eine theoretische Monomereinheit) des gleichen Styrol/Allylalkohol-Copolymeren wie in Beispiel 5(a) verwendet wurden in 40 g Aceton gelöst. Anschließend wurden 30,4 g (0,1 mol) Bernsteinsäureanhydridpropyltriethoxysilan zugegeben. Das Gemisch wurde zunächst 8 h unter Rückfluß und anschließend 16 h bei 25°C gerührt.

### Beispiel 6

Herstellung von Beschichtungsmaterialien unter Verwendung von silanisiertem Polyvinylalkohol oder silanisiertem Styrol/Allylalkohol-Copolymerem:

Folgende Kurzbezeichnungen werden verwendet:
PVA1 = Polyvinylalkohol unmodifiziert
Eisenpigment = Paliochrom R2/237 (BASF)
PVAl-Si = Polyvinylalkohol, modifiziert mit Isocyanatsilan
Al-EAA = Komplex aus Aluminium-tri-sekundärbutylat mit Acetessigsäureethylester
F-Silan = C₆F₁₃C₂H₄Si(OEt)₃
Styrol-Allyl-Si = Styrol/Allylalkohol-Copolymer

Herstellung der Dispersionen (allgemeines Verfahren):

### Variante a):

Dynasil 40, Me₂Si(OMe)₂, Al-EAA, F-Silan in Aceton mischen, anschließend Zugabe der zur stöchiometrischen Hydrolyse aller Alkoxygruppen notwendigen Wassermenge und für eine Stunde bei 20-25 °C rühren lassen. Zugabe von Dispergierhilfsmittel, anschließend Einrühren von silanisiertem Polyvinylalkohol oder unmodifiziertem Polymer (PVAl, Polyacrylsäure) und eine weitere Stunde rühren lassen.

### Variante b):

Dynasil 40, Me₂Si(OMe)₂, Al-EAA, F-Silan und silanisiertes Styrol/Allylalkohol-Copolymer werden in Aceton gelöst. Zugabe der zur stöchiometrischen Hydrolyse aller Alkoxygruppen notwendigen Wassermenge und für eine Stunde bei 20-25 °C rühren lassen. Zugabe von Dispergierhilfsmittel.

### Weiterverarbeitung analog für Variante a) und b):

Zugabe von der berechneten Menge Wasser, um nach dem Entfernen von Aceton einen Feststoffanteil von 20-30 % einzustellen. Entfernen von Aceton durch Abdampfen unter Rühren bei Raumtemperatur oder Abdestillieren unter Vakuum. Zugabe von Dispergierhilfsmittel und Einrühren von IR-reflektierendem Metallpigment.
Pigmente: IR-reflektierende Metallpigmente (z.B. Paliochrom R2/237)
Additive: Dispergierhilfsmittel (z.B. Cetyltrimethylamoniumbromid; Disperbyk 190, Disperbyk 192 der Fa. Byk Chemie GmbH, Wesel)

Randwinkel einiger bei Raumtemperatur getrockneter Schichten mit und ohne IR-reflektierendes Pigment:

| **(molare) Zusammensetzung** | **Randwinkel** (Wasser) |
|---|---|
| PVAl/Me₂Si(OEt)₂/Ti(OEt)₄ 1:0,2 + 40 % (bzgl. Feststoffanteil) Eisenpigment | 135° |
| PVAl/Me₂Si(OEt)₂/Ti(OEt)₄/Polyacrylsäure 1:0,2:0,1 + + 40 % (bzgl. Feststoffanteil) Eisenpigment | 120° |
| | |
| PVAl-Si/Al-EAA/Dynasil 40 1:1:1 | 68° |
| PVAl-Si/Me₂Si(OEt)₂ /Dynasil 40/Al-EAA 1:2:1:1 | 70° |
| PVAl-Si/Me₂Si(OEt)₂ /Dynasil 40/Al-EAA 1:4:1:1 | 95° |
| PVAl-Si/Me₂Si(OEt)₂ /Dynasil 40/Al-EAA/ 1:4:1:1:0,04 F-Silan | 111° |
| | |
| Styrol-Allyl-Si/Dynasil40/Al-EAA/F-Silan 1:4:0,5:0,125 | 68° |
| Styrol-Allyl-Si/Me₂Si(OMe)₂ /Dynasi140/ 1:4:1:0,2:0,125 Al-EAA/F-Silan | 90° |
| Styrol-Allyl-Si/Me₂Si(OMe)₂ /Dynasil40/ 1:1:4:0,5:0,125 Al-EAA/F-Silan | 92° |
| | |

## Patentansprüche

1. Beschichtungsmaterial, enthaltend die oder bestehend aus den folgenden Bestandteile(n):
a) mindestens ein Silan der Formel (I)
XₐR_{b}SiR¹ _{4-a-b} (I)
worin
X eine hydrolysierbare Gruppe ist,
R ggf. substituiertes Alkyl, Alkenyl, Aryl, Alkylaryl oder Arylalkyl ist,
R¹ ein organischer Rest, der über Kohlenstoff an das Silicium gebunden ist und eine reaktive Gruppe trägt, a eine ganze Zahl von 1 bis 3 ist und
b eine ganze Zahl von 0 bis 2 ist,
oder ein (Teil-)Hydrolysat/Kondensat dieses Silans,
b) mindestens ein Infrarot-reflektierendes Pigment, dessen Teilchengröße zu mehr als 50% im Bereich von 1 bis 50 µm liegt, und
c) ein Lösungs- und/oder Dispersionsmittel,
**dadurch gekennzeichnet, dass** entweder das Pigment mindestens in einer solchen Menge vorhanden ist, dass das Beschichtungsmaterial nach dem Auftragen auf eine Oberfläche für Licht des sichtbaren Bereichs im wesentlichen undurchlässig ist und/oder ein weiterer Bestandteil des Beschichtungsmaterials eine solche Lichtundurchlässigkeit des Beschichtungsmaterials bewirkt.

2. Beschichtungsmaterial nach Anspruch 1, **dadurch gekennzeichnet, dass** es weiterhin enthält:
(d) mindestens eine Metallverbindung der Formel (II)
M(OR²)ₙ, (II)
worin vorzugsweise M ausgewählt ist unter Ge, Sn, Pb, Ti und Zr und n 4 bedeutet oder M vorzugsweise ausgewählt ist unter B und Al und n 3 bedeutet, und
R² die gleiche Bedeutung wie R in Formel (I) hat,
oder mindestens ein Komplex-Derivat der Metallverbindung der Formel (II), wobei ein Teil oder alle Gruppen OR² ersetzt sind durch einen oder mehrere Liganden L, die stärker an das Metall M gebunden werden als die Gruppe (OR²), die/das ggf. in (teil-)hydrolysierter und/oder einkondensierter Form vorliegt.

3. Beschichtungsmaterial nach Anspruch 1 oder 2, **dadurch gekenazeichnet,** dass es weiterhin enthält:
(e) mindestens einen polymeren, als Verdickungsmittel oder Dispergierhilfsmittel dienenden organischen Zusatzstoff.

4. Beschichtungsmaterial nach einem der voranstehenden Ansprüche, **dadurch gekennzeichnet, dass** die Indices der Formel (I) die folgende Bedeutung haben:
X ist Wasserstoff, Halogen, Hydroxy, eine ggf. substituierte Alkoxy-, Acyloxy-, Alkylcarbonyl- oder Alkoxycarbonylgruppe mit vorzugsweise 1-10 Kohlenstoffatomen in der Alkyl- oder Acylgruppe, NR³ mit R³ gleich Wasserstoff, ggf. substituiertes Alkyl mit vorzugsweise 1-10 Kohlenstoffatomen oder ggf. substituiertes Aryl,
R ist eine ggf. substituierte, vorzugsweise unvollständig durch Fluor substituierte Alkyl-, Alkenyl-, Aryl-, Alkylaryl- oder Arylalkylgruppe mit 1 bis 10 Alkylkohlenstoffen, und
R¹ ist ein Rest mit mindestens einer Gruppe, die organische Reaktionen eingehen kann, vorzugsweise ausgewählt unter mindestens einer Amino-, Epoxid-, Vinyl- oder (Meth-)Acrylatgruppe.

5. Beschichtungsmaterial nach einem der voranstehenden Ansprüche, **dadurch gekennzeichnet, dass** es mindestens ein Silan der Formel (IV)
XₐSiR_{b} (IV)
ggf. in (teil-)hydrolysierter und/oder einkondensierter Form, enthält, in welchem a eine ganze Zahl von 1 bis 4 ist, a+b 4 bedeutet, X vorzugsweise ein C₁-C₄-Alkoxy ist und R vorzugsweise ein C₁-C₄-Alkyl ist.

6. Beschichtungsmaterial nach Anspruch 5, **dadurch gekennzeichnet, daß** es zusätzlich mindestens ein Silan der Formel (III)
XₐR_{b}SiR¹ _{4-a-b} (III)
ggf. in (teil-)hydolysierter und/oder einkondensierter Form, enthält, in welchem X wie für Formel (I) definiert ist, R¹ wie in Formel (I) definiert und vorzugsweise ein C₁-C₆₋Alkylenamin ist und a+b 3 bedeutet.

7. Beschichtungsmaterial nach einem der voranstehenden Ansprüche, **dadurch gekennzeichnet, dass** es mindestens ein durch eine oder mehrere Silangruppen modifiziertes, organisches Polymer, vorzugsweise silanisierten Polyvinylalkohol, silanisiertes Polyvinylbutyral oder silanisiertes Styrol/Allylalkohol-Copolymer, enthält.

8. Beschichtungsmaterial nach einem der voranstehenden Ansprüche, **dadurch gekennzeichnet, dass** das Infrarot-reflektierende Pigment (b) ausgewählt ist unter (i) Metallen und Metalllegierungen, insbesondere Aluminium, Chrom, Eisen, Kupfer, Nickel, Silber, Gold, Eisen, Zinn, Zink, Bronze, Messing, Eisenlegierungen und Nickellegierungen, (ii) Metallsulfiden, insbesondere Kupfer-, Blei- und Zinksulfid, (iii) Metallfluoriden, insbesondere Calciumfluorid, Bariumfluorid und Natriumfluorid, (iv) Metalloxiden, insbesondere Zinkoxid, Titandioxid, Magnesiumdioxid, Antimondioxid, (v) keramischen oder glasartigen Pigmenten und (vi) vorzugsweise dielektrischen, offenen oder geschlossenen Hohlkugeln mit einer möglichst geringen Wandstärke.

9. Beschichtungsmaterial nach einem der voranstehenden Ansprüche, **dadurch gekennzeichnet, dass** das Infrarotreflektierende Pigment (b) in einer Menge von mindestens 5 Gew.-%, vorzugsweise 10-60 Gew.-%, und besonders bevorzugt von 20-50 Gew.-% vorhanden ist.

10. Beschichtungsmaterial nach Anspruch 2, **dadurch gekennzeichnet, dass** das Komplex-Derivat der Metallverbindung (d) der Formel (II) ausgewählt ist unter Verbindungen mit der Formel (V)
(R²O)ₘMLₙ, (V)
worin
M gleich Ti, Zr und Al ist,
R² C₁-C₆-Alkyl ist,
L ausgewählt ist unter 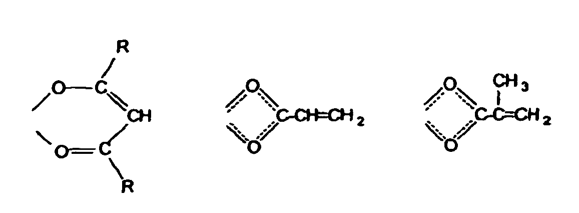 m eine ganze Zahl von 1 bis 3 ist und
n eine ganze Zahl von 1 bis 3 ist.

11. Beschichtungsmaterial nach Anspruch 3, **dadurch gekennzeichnet, dass** der polymere, als Verdickungsmittel oder Dispergierhilfsmittel dienende Zusatzstoff (e) ausgewählt ist unter Polyvinylalkohol, Polyvinylacetat, Copolymeren dieser beiden Substanzen, Poly(meth)acrylsäureester und Copolymeren davon, (Meth-)Acryl/Styrol-Copolymeren, Polyacrylsäure, Acrylsäure-Maleinsäure-Copolymeren, Styrol/Allylalkohol-Copolymeren, Poylvinylpyrrolidon und Vinylpyrrolidon/Acrylsäure-Copolymeren.

12. Beschichtungsmaterial nach Anspruch 3 oder 11, **dadurch gekennzeichnet, daß** mindestens ein Silan der Formel (I) vorhanden ist, in welchem a+b<4 ist und die Gruppe R' einen organisch addierbaren oder polymerisierbaren Rest trägt, der mit mindestens einem polymeren Zusatzstoff copolymerisierbar oder addierbar ist oder copolymerisiert oder addiert vorliegt.

13. Beschichtungsmaterial nach Anspruch 4, **dadurch gekennzeichnet, daß** es weiterhin enthält:
(f) mindestens ein organisches Monomer, ausgewählt unter polymerisierbaren oder polyaddierbaren Monomeren, vorzugsweise solchen, die (Meth-)Acrylat-, Vinyl- oder EpoxyGruppen tragen, wobei mindestens ein Silan der Formel (I) eine mit diesem Monomer polymerisierbare Gruppe R' trägt.

## Claims

1. Coating material containing or consisting of the following component(s):
a) at least one silane of the formula (I)
XₐR_{b}SiR¹ _{4-a-b} (I)
wherein
X is a hydrolysable group,
R is optionally substituted alkyl, alkenyl, aryl, alkylaryl or arylalkyl,
R¹ an organic radical, which is bound to the silicon via carbon and carries a reactive group,
a is a whole number from 1 to 3 and
b is a whole number from 0 to 2,
or a (part)hydrolysate/condensate of this silane,
b) at least one infrared-reflecting pigment, more than 50% of the particle size of which lies in the range from 1 to 50 µm,
and
c) a solvent and/or dispersant,
**characterised in that** either the pigment is present at least in such a quantity that the coating material is essentially impermeable to light of the visible range after applying to a surface and/or a further component of the coating material effects such light impermeability of the coating material.

2. Coating material according to claim 1, **characterised in that** it also contains:
(d) at least one metal compound of the formula (II)
M(OR²)ₙ, (II)
wherein M is preferably selected from Ge, Sn, Pb, Ti and Zr and n denotes 4 or M is preferably selected from B and Al and n denotes 3, and
R² has the same meaning as R in formula (I),
or at least one complex derivative of the metal compound of formula (II), wherein some or all groups OR² are replaced by one or more ligands L, which are bound more strongly to the metal M than the group (OR²), which is present optionally in (part)hydrolysed and/or condensed form.

3. Coating material according to claim 1 or 2, **characterised in that** it also contains:
(e) at least one polymer, organic additive serving as thickening agent or dispersing auxiliary.

4. Coating material according to one of the above claims, **characterised in that** the indices of the formula (I) have the following meaning:
X is hydrogen, halogen, hydroxy, an optionally substituted alkoxy, acyloxy, alkylcarbonyl or alkoxycarbonyl group having preferably 1-10 carbon atoms in the alkyl or acyl group, NR³ where R³ is hydrogen, optionally substituted alkyl having preferably 1-10 carbon atoms or optionally substituted aryl,
R is an optionally substituted, preferably incompletely fluorine-substituted alkyl, alkenyl, aryl, alkylaryl or arylalkyl group having 1 to 10 alkyl carbons, and
R¹ is a radical having at least one group which may enter organic reactions, preferably selected from at least one amino, epoxy, vinyl or (meth)acrylate group.

5. Coating material according to one of the above claims, **characterised in that** it contains at least one silane of the formula (IV)
XₐSiR_{b} (IV)
optionally in (part)hydrolysed and/or condensed form, in which a is a whole number from 1 to 4, a+b denotes 4, X is preferably C₁-C₄ alkoxy and R is preferably a C₁-C₄ alkyl.

6. Coating material according to claim 5, **characterised in that** it additionally contains at least one silane of the formula (III)
XₐR_{b}SiR¹ _{4-a-b} (III)
optionally in (part)hydrolysed and/or condensed form, in which X is defined as for formula (I),
R¹ is defined as in formula (I) and preferably is a C₁-C₆ alkylene amine and a+b denotes 3.

7. Coating material according to one of the above claims, **characterised in that** it contains at least one organic polymer modified by one or more silane groups, preferably silanised polyvinyl alcohol, silanised polyvinyl butyral or silanised styrene/allyl alcohol copolymer.

8. Coating material according to one of the above claims, **characterised in that** the infrared-reflecting pigment (b) is selected from (i) metals and metal alloys, in particular aluminium, chromium, iron, copper, nickel, silver, gold, iron, tin, zinc, bronze, brass, iron alloys and nickel alloys, (ii) metal sulphides, in particular copper, lead and zinc sulphide, (iii) metal fluorides, in particular calcium fluoride, barium fluoride and sodium fluoride, (iv) metal oxides, in particular zinc oxide, titanium dioxide, magnesium dioxide, antimony dioxide, (v) ceramic or glass-like pigments and (vi) preferably dielectric, open or closed hollow spheres having as low as possible a wall thickness.

9. Coating material according to one of the above claims, **characterised in that** the infrared-reflecting pigment (b) is present in a quantity of at least 5 wt.%, preferably 10-60 wt.%, and particularly preferably of 20-50 wt.%.

10. Coating material according to claim 2, **characterised in that** the complex derivative of the metal compound (d) of formula (II) is selected from compounds having the formula (V)
(R²O)ₘMLₙ, (V)
wherein
M is Ti, Zr and Al,
R² is C₁-C₆ alkyl,
L is selected from 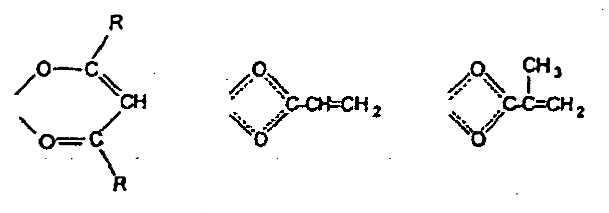 m is a whole number from 1 to 3 and
n is a whole number from 1 to 3.

11. Coating material according to claim 3, **characterised in that** the polymer additive (e) serving as thickening agent or dispersing auxiliary is selected from polyvinyl alcohol, polyvinyl acetate, copolymer of these two substances, poly(meth)acrylate and copolymers thereof, (meth)acrylic/styrene copolymers, polyacrylic acid, acrylic acid-maleic acid copolymers, styrene/allyl alcohol copolymers, polyvinylpyrrolidone and vinylpyrrolidone/acrylic acid copolymers.

12. Coating material according to claim 3 or 11, **characterised in that** at least one silane of the formula (I) is present, in which a+b is <4 and the group R' carries and organically addable or polymerisable radical, which can be copolymerised or can be added using at least one polymer additive or is present in copolymerised or added form.

13. Coating material according to claim 4, **characterised in that** it also contains:
(f) at least one organic monomer selected from polymerisable or polyaddable monomers, preferably those which carry (meth)acrylate, vinyl or epoxy groups, wherein at least one silane of the formula (I) carries a group R' which can be polymerised using this monomer.

## Revendications

1. Matériau de revêtement, contenant ou constitué du ou des composants suivants :
a) au moins un silane de formule (I) :
XₐR_{b}SiR¹ _{4-a-b} (I)
dans laquelle :
X est un groupement hydrolysable,
R est un alkyle, un alcényle, un aryle, un alkylaryle ou un arylalkyle éventuellement substitué,
R¹ est un radical organique qui est lié par un carbone au silicium et porte un groupement réactif,
a est un nombre entier de 1 à 3 et
b est un nombre entier de 0 à 2, ou un hydrolysat(partiel)/condensat de ce silane,
b) au moins un pigment réfléchissant les infrarouges, dont la taille particulaire se situe pour plus de 50% dans la plage de 1 à 50 µm,
et
c) un solvant et/ou un agent dispersant,
**caractérisé en ce que** le pigment est présent au moins en quantité telle que le matériau de revêtement, après application sur une surface, soit sensiblement opaque à la lumière du domaine visible et/ou qu'un autre composant du matériau de revêtement suscite une telle opacité à la lumière du matériau de revêtement.

2. Matériau de revêtement selon la revendication 1, **caractérisé en ce qu'**il comprend en outre :
(d) au moins un composé métallique de formule (II) :
M (OR²)ₙ (II)
dans laquelle, de préférence, M est choisi parmi Ge, Sn, Pb, Ti et Zr et n vaut 4 ou M est choisi de préférence parmi B et Al et n vaut 3, et R² a la même signification que R dans la formule (I), ou au moins un dérivé complexe du composé métallique de formule (II), dans lequel une partie ou la totalité des groupements OR² est remplacée par un ou plusieurs ligands L, qui sont liés plus fortement au métal M que le groupement (OR²), qui se présente éventuellement sous une forme (partiellement) hydrolysée et/ou condensée.

3. Matériau de revêtement selon la revendication 1 ou 2, **caractérisé en ce qu'**il comprend en outre :
(e) au moins un additif organique polymère servant d'agent épaississant ou d'agent auxiliaire dispersant.

4. Matériau de revêtement selon l'une quelconque des revendications précédentes, **caractérisé en ce que** les indices de formule (I) ont la signification suivante :
X est de l'hydrogène, un halogène, un hydroxy, un groupement alcoxy, acyloxy, alkylcarbonyle ou alcoxycarbonyle éventuellement substitué ayant de préférence 1 à 10 atomes de carbone dans le groupement alkyle ou acyle, NR³ avec R³ représentant de l'hydrogène, un alkyle éventuellement substitué avec, de préférence, 1 à 10 atomes de carbone ou un aryle éventuellement substitué,
R est un groupement alkyle, alcényle, aryle, alkylaryle ou arylalkyle éventuellement substitué, de préférence incomplètement substitué par du fluor, avec 1 à 10 atomes de carbone d'alkyle, et R¹ est un radical avec au moins un groupement qui peut intervenir dans des réactions organiques, de préférence choisi parmi au moins un groupement amino, époxyde, vinyle ou (méth)acrylate.

5. Matériau de revêtement selon l'une quelconque des revendications précédentes, **caractérisé en ce qu'**il contient au moins un silane de formule (IV) :
XₐSiR_{b} (IV)
éventuellement sous une forme (partiellement) hydrolysée et/ou condensée, dans laquelle a est un nombre entier de 1 à 4, a+b vaut 4, X est de préférence un alcoxy en C₁-C₄ et R de préférence un alkyle en C₁₋C₆.

6. Matériau de revêtement selon la revendication 5, **caractérisé en ce qu'**il comprend en outre au moins un silane de formule (III) :
XₐR_{b}SiR¹ _{4-a-b} (III)
éventuellement sous forme (partiellement) hydrolysée et/ou condensée, dans laquelle X est défini comme pour la formule (I), R¹ est défini comme dans la formule (I) et représente de préférence une alkylèneamine en C₁-C₆ et a+b vaut 3.

7. Matériau de revêtement selon l'une quelconque des revendications précédentes, **caractérisé en ce qu'**il contient au moins un polymère organique modifié par un ou plusieurs groupements silane, de préférence de l'alcool polyvinylique silanisé, du butyral polyvinylique silanisé ou un copolymère silanisé de styrène/alcool allylique.

8. Matériau de revêtement selon l'une quelconque des revendications précédentes, **caractérisé en ce que** le pigment (b) réfléchissant les infrarouges est choisi parmi (i) les métaux et alliages de métaux, en particulier l'aluminium, le chrome, le fer, le cuivre, le nickel, l'argent, l'or, l'étain, le zinc, le bronze, le laiton, les alliages de fer et les alliages de nickel, (ii) les sulfures de métaux, en particulier les sulfures de cuivre, de plomb et de zinc, (iii) les fluorures de métaux, en particulier le fluorure de calcium, le fluorure de baryum et le fluorure de sodium, (iv) les oxydes de métaux, en particulier, l'oxyde de zinc, le dioxyde de titane, le dioxyde de magnésium, le dioxyde d'antimoine, (v) des pigments céramiques ou vitreux et (vi) de préférence des billes creuses diélectriques, ouvertes ou fermées, avec une épaisseur de paroi la plus petite possible.

9. Matériau de revêtement selon l'une quelconque des revendications précédentes, **caractérisé en ce que** le pigment (b) réfléchissant les infrarouges est présent en quantité d'au moins 5% en poids, de préférence de 10 à 60% en poids, mieux encore de 20 à 50% en poids.

10. Matériau de revêtement selon la revendication 2, **caractérisé en ce que** le dérivé complexe du composé métallique (d) de formule (II) est choisi parmi les composés de formule (V) :
(R²O)ₘMLₙ (V)
dans laquelle :
M est égal à Ti, Zr et Al,
R² est un groupement alkyle en C₁ à C₆;
L est choisi parmi 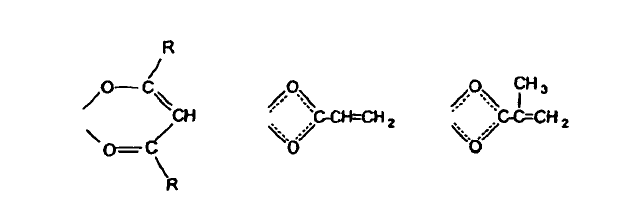
m représente un nombre entier de 1 à 3 et
n représente un nombre entier de 1 à 3.

11. Matériau de revêtement selon la revendication 3, **caractérisé en ce que** l'additif polymère (e) servant d'agent épaississant ou d'agent auxiliaire dispersant est choisi parmi l'alcool polyvinylique, le poly(acétate de vinyle), des copolymères de ces deux substances, les esters d'acide polyméthacrylique et leurs copolymères, des copolymères de (méth-)acrylique/styrène, l'acide polyacrylique, des copolymères d'acide acrylique et d'acide maléique, des copolymères de styrène/alcool allylique, la polyvinylpyrrolidone et des copolymères de vinylpyrrolidone/acide acrylique.

12. Matériau de revêtement selon la revendication 3 ou 11, **caractérisé en ce qu'**il y a au moins un silane de formule (I), dans laquelle a+b<4 et le groupement R' porte un radical organiquement additionnable ou polymérisable, qui est copolymérisable ou additionnable ou qui est copolymérisé ou additionné avec au moins un additif polymère.

13. Matériau de revêtement selon la revendication 4, **caractérisé en ce qu'**il contient en outre :
(f) au moins un monomère organique, choisi parmi des monomères polymérisables ou polyadditionnables, de préférence ceux qui portent des groupements (méth)acrylate, vinyle ou époxy, où au moins un silane de formule (I) porte un groupe R' polymérisable avec ce monomère.
